# EUROPÄISCHE PATENTSCHRIFT

(11) **EP 0 344 641 B1**
(45) Veröffentlichungstag und Bekanntmachung des Hinweises auf die Patenterteilung: **13.04.1994**
(21) Anmeldenummer: 89109539.0
(22) Anmeldetag: 26.05.1989
(51) Int. Cl.: H02G 3/12

(54) **Elektrisches Installationsgerät**
Electrical installation apparatus
Appareil d'installation électrique

(30) Priorität: 03.06.1988 DE 8807214 U
(43) Veröffentlichungstag der Anmeldung: 06.12.1989
(73) Patentinhaber: Asea Brown Boveri Aktiengesellschaft, 68309 Mannheim (DE)
(72) Erfinder: Knorr, Michael, D-5980 Werdohl (DE); Schmalenbach, Werner, D-5880 Lüdenscheid (DE)
(74) Vertreter: Rupprecht, Klaus, Dipl.-Ing.

(56) Entgegenhaltungen:
- DE-A- 3 536 005
- DE-U- 8 504 260

## Beschreibung

Die Erfindung betrifft ein elektrisches Installationsgerät der im Oberbegriff des Anspruchs 1 genannten Art.

Bei Installationsgeräten (z.B. Schalter, Taster, Steckdosen usw.) sind oft Bezeichnungsschilder zweckmäßig, die Hinweise darüber geben, welcher elektrische Verbraucher mit dem Installationsgerät in elektrisch leitender Verbindung steht. So könnte bspw. ein Schalter die Bezeichnung "Kellerlicht", ein Taster die Bezeichnung "Türklingel" oder eine Steckdose die nähere Bezeichnung des anzuschließenden Verbrauchers tragen.

Bei verschiedenen Installationsprogrammen sind Bezeichnungsschilder bekannt, die teilweise in den Geräteabdeckungen oder Schaltwippen integriert sind oder als zusätzliche Elemente auf oder an den Geräteabdeckungen befestigt werden.

In der DE-OS 35 36 005 ist ein Bezeichnungsschildträger für Unterputz-Installationsgeräte offenbart, an welchem eine mit Rastnoppen versehene Lasche vorgesehen ist. Die Lasche kann unter den Tragring des zu installierenden Installationsgerätes geschoben und deren angeformte Rastnoppen können mit einem am Tragring vorhandenen schlüssellochartigen Befestigungsloch verrastet werden.

Nachteilig ist hierbei, daß die Befestigungslasche unter den Tragring geklemmt werden muß. Dies erfordert nämlich besondere Umstände, weil der Tragring zuvor in seiner Wandbefestigung gelöst werden muß, um die Befestigungslasche zwischen Tragring und Wand einführen zu können. Ein weiterer Nachteil der bekannten Anordnung ist dadurch gegeben, daß aufgrund der Klemmung der Befestigungslasche unterhalb des Tragrings das Installationsgerät nicht mehr plan auf der Wand aufliegt. Insbesondere bei Mehrfach-Kombinationen aus Installationsgeräten können demzufolge Probleme auftreten, weil die Zentralscheiben oder Betätigungsglieder (Schalterwippen oder dgl.) unter Umständen innerhalb der Abdeckrahmen nicht mehr exakt plan liegen und somit eine Betätigung des Installationsgeräts durch Klemmungen erschwert werden könnte. Da der im Stand der Technik offenbarte Bezeichnungsschildträger außerhalb der Abdeckrahmen zu liegen kommt, ist weiter seine Anwendbarkeit bei Mehrfach-Kombinationen aus Installationsgeräten entscheidend eingeschränkt. Bei einer senkrecht übereinander angeordneten Kombination von Installationsgeräten kann nur das oberste oder das unterste Installationsgerät bezeichnet werden, während die mittleren Installationsgeräte nicht mit Bezeichnungsschildträgern versehen werden können.

Es ist deshalb Aufgabe vorliegender Erfindung, das gattungsgemäße Installationsgerät derart weiterzubilden, daß der Bezeichnungsschildträger unter Vermeidung vorstehend beschriebener Nachteile in einfacher und übersichtlicher Weise unmittelbar unter dem Abdeckrahmen des Installationsgeräts so integriert werden kann, daß er auch bei kombinierten, insbesondere vertikal übereinander angeordneten Mehrfach-Installationsgeräten Anwendung finden kann.

Diese Aufgabe wird durch die im Anspruch 1 näher gekennzeichneten Merkmale gelöst. Vorteilhafte Ausführungsformen der Erfindung sind in den Unteransprüchen näher gekennzeichnet.

Die Erfindung soll nachstehend anhand der Zeichnung näher erläutert und beschrieben werden.

Es zeigen:
- Figur 1:: Eine Aufsicht auf einen Zweifach-Abdeckrahmen einer Kombination aus zwei Installationsgeräten,
- Figur 2:: eine Schnittansicht durch den Zweifach-Abdeckrahmen mit integrierten Bezeichnungsschildträgern gemäß der Schnittlinie II-II in Figur 1,
- Figur 3:: eine Aufsicht auf einen Tragring mit aufgerastetem Bezeichnungsschildträger nach einem ersten Ausführungsbeispiel,
- Figur 4:: eine Aufsicht auf einen aufzurastenden Bezeichnungsschildträger,
- Figur 5:: eine Schnittansicht des aufzurastenden Bezeichnungsschildträgers gemäß der Schnittlinie V-V in Figur 4,
- Figur 6:: eine Aufsicht auf einen Tragring mit aufgeklebtem Bezeichnungsschildträger nach einem weiteren Ausführungsbeispiel,
- Figur 7:: eine Aufsicht auf einen aufzuklebenden Bezeichnungsschildträger.

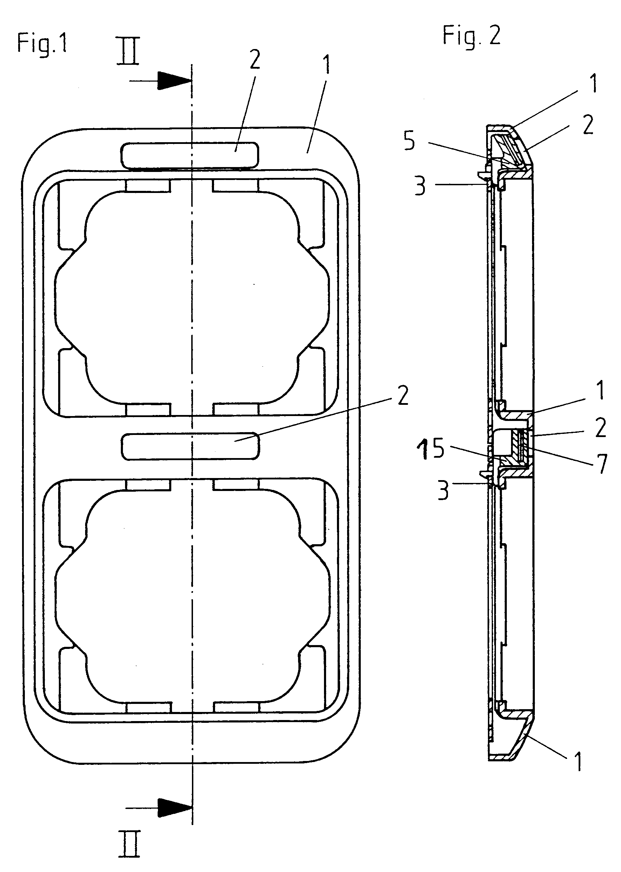

Figur 1 zeigt einen Abdeckrahmen 1 einer Zweifach-Kombination aus senkrecht übereinander angeordneten Installationsgeräten. Sichtfenster 2 sind jeweils im oberen Teil des Abdeckrahmens 1 waagerecht angeordnet.

Figur 2 zeigt eine Schnittansicht des Abdeckrahmens 1 nebst integrierten transparenten Bezeichnungsschildträgern 5,15. Ein erster Bezeichnungsschildträger 5 ist hierbei unterhalb des oberen Teils des Abdeckrahmens 1 zwischen einem Tragring 3 und dem Abdeckrahmen 1 integriert. Der erste Bezeichnungsschildträger 5 weist im wesentlichen die Form eines Parallelepipeds auf, welches sich unmittelbar unter dem Sichtfenster 2 an den Abdeckrahmen 1 anschmiegt. Die unmittelbar unter dem Sichtfenster 2 anliegende Fläche der Bezeichnungsschildträger 5,15 ist größer als die Fläche des Sichtfensters 2. Hierdurch wird vorteilhaft vermieden, daß die äußeren Ränder des Bezeichnungsschildträgers 5,15 nach außen sichtbar werden. Somit ist eine optisch optimale Anordnung des Bezeichnungsschildes 6 gewährleistet.

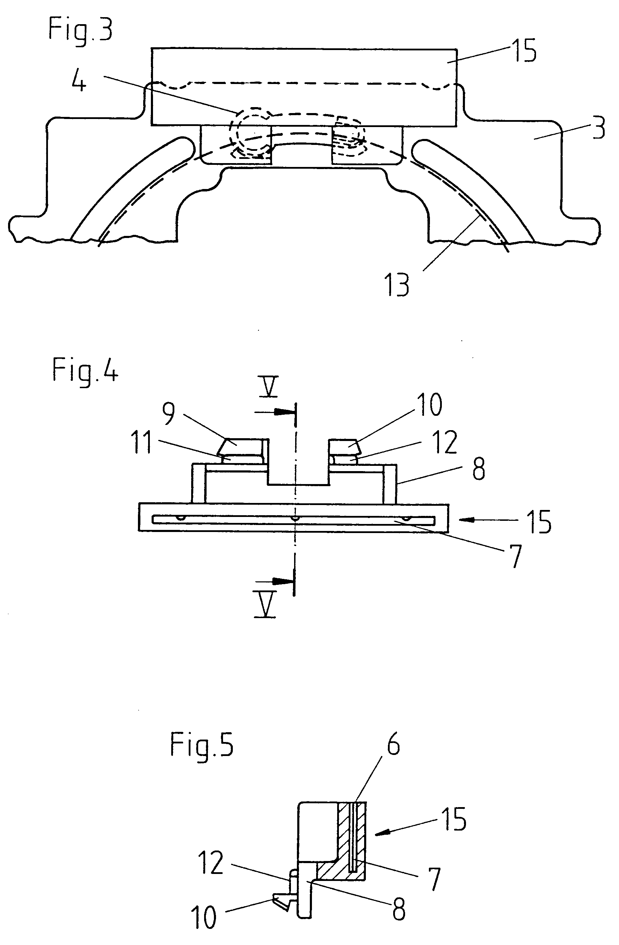

Ein im mittleren Teil des Abdeckrahmens 1 integrierter zweiter Bezeichnungsschildträger 15 weist im wesentlichen die Form eines Quaders auf und ist ebenfalls unmittelbar unterhalb des zugeordneten Sichtfensters 2 angeordnet. Die Bezeichnungsschildträger 5, 15 weisen jeweils ein Bezeichnungsschildeinschubfach 7 auf, in welches ein Bezeichnungsschild 6 eingeschoben ist. Wie Figur 4 zeigt, ist an den Bezeichnungsschildträgern 5,15 jeweils ein Ansatzstück 8 vorgesehen, an welchen Rastnocken 9,10 und Klemmrippen 11,12 angeformt sind. Die ersten Rastnocken 9 nebst den ersten Klemmrippen 11 sowie die zweiten Rastnocken 10 nebst den zweiten Klemmrippen 12 sind hierbei korrespondierend und formschlüssig einem schlüssellochartigen Befestigungsloch 4 des Tragrings 3 zugeordnet, wie Figur 3 zeigt. Die Bezeichnungsschildträger 5,15 können mittels der Rastnocken 9,10 auf das Befestigungsloch 4 aufgerastet bzw. mit den Klemmrippen 11,12 im Befestigungsloch 4 eingeklemmt werden. Hierdurch durchgreifen die Rastnocken 9,10 das Befestigungsloch 4 in denjenigen Bereichen, die innerhalb eines Normkreises 13 einer genormten Unterputz-Einbaudose liegen. Die Klemmrippen 11,12 sind formschlüssig auf die Kontur des Befestigungslochs 4 angepaßt und liegen in dem Tragring 3 ein. Hierdurch ist eine sichere und einfache Verrastung des Bezeichnungsschildträgers 5,15 im Tragring 3 gewährleistet.

Figur 4 zeigt eine Aufsicht auf den Bezeichnungsschildträger 15 mit den Rastnocken 9,10, den Klemmrippen 11,12 sowie dem Ansatzstück 8 und dem Bezeichnungsschildeinschubfach 7, wohingegen Figur 5 eine Schnittansicht des Bezeichnungsschildträgers 5 gemäß der Schnittlinie V-V in Figur 4 zeigt.

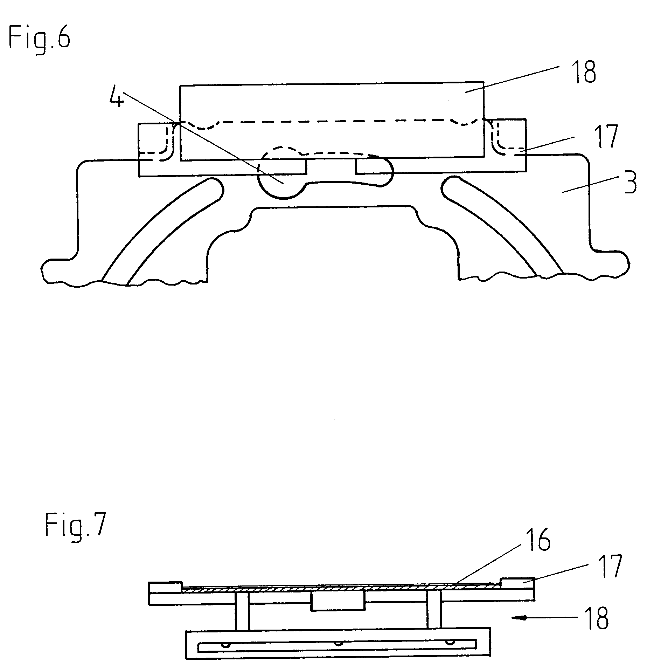

Die Figuren 6,7 zeigen als weiteres Ausführungsbeispiel einen dritten Bezeichnungsschildträger 18, welcher mittels eines doppelseitig klebenden Folienbandes 16 auf der Oberfläche des Tragrings 3 festgelegt ist, wobei am dritten Bezeichnungsschildträger 18 angeformte Ansätze oder Rippen 17 an der Außenkontur des Tragrings 3 und/oder der Innenkontur des Befestigungslochs 4 zu einer formschlüssigen Anlage gelangen. Bei einer Ausbildung des erfindungsgemäßen Bezeichnungsschildträgers nach diesem weiteren Ausführungsbeispiel wird vorteilhaft erreicht, daß der gesamte unterhalb des Tragrings 3 vorhandene Raum ohne Beeinflussung durch den Bezeichnungsschildträger für den Einbau von Installationsgeräten zur Verfügung steht.

### Bezugzeichenliste

- 1: Abdeckrahmen
- 2: Sichtfenster
- 3: Tragring
- 4: Befestigungsloch
- 5: erster Bezeichnungsschildträger
- 6: Bezeichnungsschild
- 7: Bezeichnungsschildeinschubfach
- 8: Ansatzstück
- 9: 1. Rastnocke
- 10: 2. Rastnocke
- 11: erste Klemmrippe
- 12: zweite Klemmrippe
- 13: Normkreis
- 15: zweiter Bezeichnungsschildträger
- 16: Folienband
- 17: Rippen
- 18: dritter Bezeichnungsschildträger

## Patentansprüche

1. Elektrisches Installationsgerät mit einem in einer Unterputz-Einbaudose verankerten und mindestens ein schlüssellochartiges Befestigungsloch (4) aufweisenden Tragring (3), einem Abdeckrahmen (1) sowie einem Bezeichnungsschildträger (5,15,18), dadurch gekennzeichnet, daß im Abdeckrahmen (1) mindestens ein Sichtfenster (2) eingelassen ist und daß der Bezeichnungsschildträger (5,15,18) unter Anpassung an die jeweilige Formgebung des Abdeckrahmens (1) auf der dem Abdeckrahmen (1) zugekehrten Oberfläche des Tragrings (3) zwischen dem Tragring (3) und dem Abdeckrahmen (1) festgelegt ist.

2. Elektrisches Installationsgerät nach Anspruch 1, dadurch gekennzeichnet, daß der Bezeichnungsschildträger (5,15) im Befestigungsloch (4) des Tragrings (3) mittels einer Rast- und Klemmvorrichtung (9,10,11,12) festgelegt ist, wobei am Bezeichnungsschildträger (5,15) mit der Innenkontur des Befestigungslochs (4) formschlüssig korrespondierende Rastnocken (9,10) sowie Klemmrippen (11,12) vorgesehen sind.

3. Elektrisches Installationsgerät nach Anspruch 2, dadurch gekennzeichnet, daß die Rastnocken (9,10) das Befestigungsloch (4) durchgreifen, wobei deren durchgreifende Teile innerhalb der Fläche eines Normkreises (13) einer Norm-Unterputz-Einbaudose zu liegen kommen, und daß die Klemmrippen (11,12) den Tragring (3) nicht durchgreifen, wobei deren im Befestigungsloch (4) klemmweise einliegende Teile außerhalb der Fläche des Normkreises (13) in dem Tragring (3) einliegen.

## Claims

1. Electrical installation device comprising a support ring (3) which is anchored in a flush-mounting installation box and exhibits at least one keyhole-like mounting hole (4), a cover frame (1) and a label carrier (5, 15, 18), characterized in that at least one display window (2) is inserted in the cover frame (1) and that the label carrier (5, 15, 18) is fixed on the surface of the support ring (3) facing the cover frame (1) between the support ring (3) and the cover frame (1) with adaptation to the respective shape of the cover frame (1).

2. Electrical installation device according to Claim 1, characterized in that the label carrier (5, 15) is fixed in the mounting hole (4) of the support ring (3) by means of a locking and clamping device (9, 10, 11, 12), locking cams (9, 10) and clamping ribs (11, 12) corresponding in a form-locked manner to the inner contour of the mounting hole (4) being provided at the label carrier (5, 15).

3. Electrical installation device according to Claim 2, characterized in that the locking cams (9, 10) pass through the mounting hole (4), in which arrangement their penetrating parts come to rest within the area of a standard circle (13) of a standard flush-mounting installation box, and in that the clamping ribs (11, 12) do not pass through the support ring (3), their parts resting in a clamping manner in the mounting hole (4) resting in the support ring (3) outside the area of the standard circle (13).

## Revendications

1. Dispositif d'installation électrique comportant une bague-support (3) ancrée dans une boîte de branchement encastrée et présentant au moins un trou de fixation (4) en forme de trou de serrure, un cadre de recouvrement (1) ainsi qu'un support de plaque indicatrice (5, 15, 18), caractérisé par le fait qu'au moins une fenêtre (2) est ménagée dans le cadre de recouvrement (1) et par le fait que le support de plaque indicatrice (5, 15, 18) est fixé, avec adaptation à la forme respective du cadre de recouvrement (1), sur la surface de la bague-support (3) qui est tournée vers le cadre de recouvrement (1), entre la bague-support (3) et le cadre de recouvrement (1).

2. Dispositif d'installation électrique selon la revendication 1, caractérisé par le fait que le support de plaque indicatrice (5, 15) est fixé dans le trou de fixation (4) de la bague-support (3) au moyen d'un dispositif d'encliquetage et de blocage (9, 10, 11, 12), le support de plaque indicatrice (5, 15) comportant des ergots élastiques (9, 10), qui correspondent par complémentarité de forme au contour intérieur du trou de fixation (4), ainsi que des nervures de blocage (11, 12).

3. Dispositif d'installation électrique selon la revendication 2, caractérisé par le fait que les ergots élastiques (9, 10) traversent le trou de fixation (4), leurs parties traversantes se situant à l'intérieur de la superficie d'un cercle normalisé (13) d'une boîte de branchement encastrée normalisée, et par le fait que les nervures de blocage (11, 12) ne traversent pas la bague-support (3), leurs parties insérées par serrage dans le trou de fixation (4) se situant à l'extérieur de la superficie du cercle normalisé (13) dans la bague-support (3).
